# EUROPEAN PATENT APPLICATION

(11) **EP 3 790 131 A1**
(43) Date of publication of application: **10.03.2021**
(21) Application number: 19195470.0
(22) Date of filing: 04.09.2019
(51) Int. Cl.: H02G 1/14, H02G 1/00

(54) **MOUNTING DEVICE FOR A SHIELDED Y-SPLICE CONNECTOR**

(71) Applicant: Aptiv Technologies Limited, St. Michael (BB)
(72) Inventor: PODOLAK, Marcin, 33-394 Kl czany (PL); KULIGOWSKI, Michal, 31-603 Kraków (PL)
(74) Representative: Vigand, Philippe

(57) **Abstract**

The disclosure relates to a mounting device for a shielded Y-splice connector, characterized in that it comprises:
- a clamp (1) including a gripping area for a cable (6) of the shielded Y-splice connector;
- a unit (2, 3) for moving the clamp (1) in a direction parallel to the cable (6) axis when held by the clamp (1).

## Description

### Technical Field

The disclosure is a mounting device for a shielded Y-splice connector and more particularly a device for assembling the cables to the connector.

### Background Art

As known, a shielded Y-splice connector includes a housing designed to receive one end of three electrical cables. When mounting the cables on the housing, sealing and anti-pull-out devices must be installed between the housing and the cables.

This assembly operation is carried out manually. A first hand of the user holds the cable and the second hand assembles the components ensuring waterproofness and anti-pullout. However, the flexibility of the cable makes this operation laborious and time-consuming.

### General Description

The purpose of the disclosure is therefore to provide a mounting device for a shielded Y-splice connector that facilitates cable mounting operations on the connector housing.

Then, a first aspect of the disclosure concerns a mounting device for a shielded Y-splice connector, characterized in that it comprises, a clamp includes a gripping area for a cable of the shielded Y-splice connector, means for moving the clamp, i.e. a unit for moving the clamp, in a direction parallel to the cable axis when held by the clamp.

Using the clamp with such gripping area along with the unit for moving the clamp facilitates holding the cable while mounting it into the connector.

According to another feature, the mounting device includes a guide rail for the translation movement of the clamp.

Using a guide rail ensures a linear mounting of the cable into the connector.

According to another feature, the moving unit of the clamp comprises a piston whose one end is fixed on the clamp and the second end is fixed to an anchor.

Using a piston ensures to easily apply the adequate force to mount the cable into the connector.

According to another feature, the moving unit of the clamp comprises a sensor detecting the displacement of moving the clamp.

Using a sensor to detect the displacement of moving the clamp ensures to mount the cable into the connector at the right position.

### Brief Description of the Drawings

Other characteristics and advantages of the present disclosure will become clearer when reading the following detailed description of a method of making the disclosure given by way of example, which is not exhaustive and is illustrated by the annexed drawings, in which:
Fig. 1 represents a top view of the mounting device of a shielded Y-splice connector according to the disclosure,
Fig. 2 represents a front view of the mounting device of a shielded Y-splice connector according to the disclosure.

### Description of Preferred Embodiments

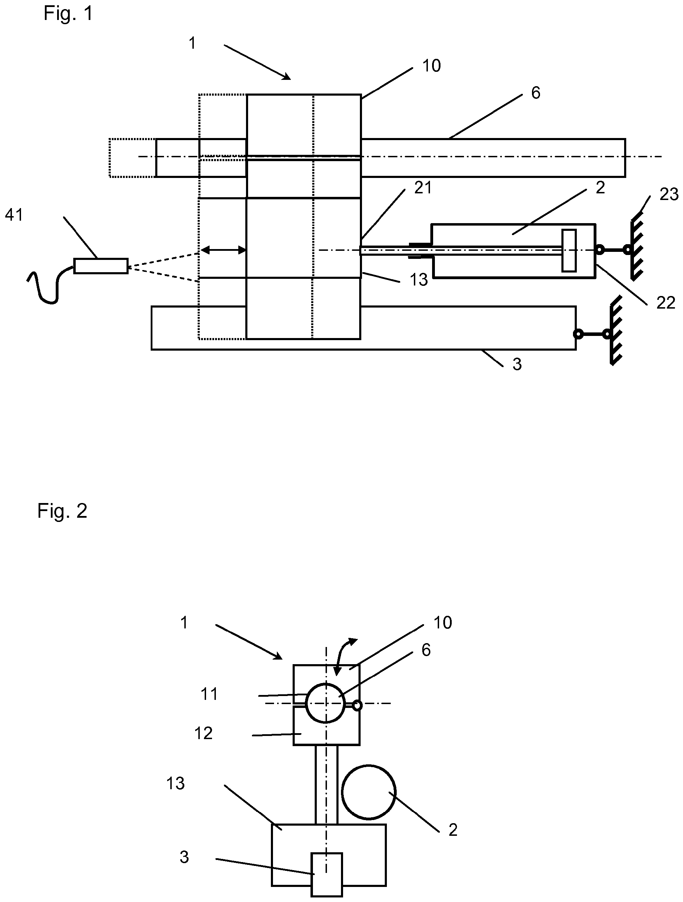

The disclosure will now be described with reference to Figures 1 and 2.

A shielded Y-splice connector generally includes a housing comprising a lower body and an upper cover forming a housing for splicing cables. The housing also includes three openings designed to receive three cable-fixing devices on the connector housing.

The assembly of the Y-splice shielded connector includes, in particular, the assembly of sealing devices between the cables and the housing as well as the assembly of anti-pulling devices for the cables.

To facilitate assembly, the assembly device according to the disclosure is intended to tension the connector cable without the user's intervention so that the user will have both hands for mounting the various sealing and anti-pulling devices on the connector housing.

According to the disclosure, the mounting device includes a clamp 1 to hold the cable and a moving unit 3 to translate the clamp 1 along the direction of the cable axis when it is held by the clamp. Clamp 1 includes a gripping area in the form of a jaw with a fixed part 12 and a movable part 10. The movable part 10 closes on the fixed part leaving a circular hole 11 arranged to receive the cable. The dimensions of hole 11 are slightly smaller than the dimensions of the cable so that when the jaw of the clamp 1 is closed a pressure is exerted on the cable to keep it firmly in the jaw but without damaging it. The clamp can include a locking mechanism in the closed position.

The jaw of clamp 1 can be mounted on a base 13. The translation moving units 2, 3 of the clamp 1 is for example mounted on the base 13. This translation units includes a pneumatic tensioning system such as a cylinder 2. A first end 21 of the cylinder is mounted on the clamp 1, for example on base 13. The second end 22 of the cylinder is fixed on an anchor 23. The axis of cylinder 2 is substantially parallel to the translation direction of clamp 1.

Any other translation system can be used instead of the cylinder, such as a worm screw, connecting rod/piston system.

The translation guidance of the clamp 1 can be provided by a guide rail 3 on which the base 13 of the clamp 1 is mounted, for example. The guide rail prevents deformation or bending of the cable, which would make it difficult to install the sealing and anti-pulling devices.

Depending on a design variant, in order to control the cable tension, the length of the clamp 1 translation can be controlled by proximity sensor. A sensor 41 is mounted near the base 13 of the clamp 1 and more particularly parallel to the direction of translation of the base 13. Then, the sensor 41 measures the displacement of the base 13 along the translation movement. When the distance made by the base 13 during the translation movement correspond to a predetermined distance providing correct tension in the cable, the piston will be stopped.

Other translation control systems can replace the proximity sensor, for example, two sensors are thus placed near the base 13 of the clamp 1. A first sensor defines the starting position of the clamp 1 and a second sensor defines the end position corresponding to the set travel length. When the second sensor detects the presence of the base, cylinder 2 is stopped. Another solution could be to use, a timer that can control the operating time of cylinder 2 so that cylinder 2 only operates for a specified time corresponding to the set travel length.

The implementation of the device according to the disclosure is carried out as follows:

The user positions the clamp 1 in its initial position in front of the first sensor 41 corresponding to the starting point of the translation displacement. Cable 6 is then placed in the jaw of the clamp 1. The jaw is closed on cable 6 to hold it in place. Then the user releases cylinder 2 which will move clamp 1 and start tensioning cable 6. As soon as the second sensor 42 detects the base 13 of the clamp 1, cylinder 2 is stopped. The user can then continue mounting, for example, the sealing and anti-pulling devices on the connector with a live cable and both hands-free.

It will be understood that various modifications and/or improvements obvious to the skilled person may be made to the different methods of making the disclosure described in this description without going beyond the scope of the claims.

## Claims

1. A mounting device for a shielded Y-splice connector, **characterized in that** it comprises:
- a clamp (1) including a gripping area for a cable (6) of the shielded Y-splice connector;
- a unit (2, 3) for moving the clamp (1) in a direction parallel to the cable (6) axis when held by the clamp (1).

2. The mounting device for a shielded Y-splice connector according to claim 1, **characterized in that** it includes a guide rail (3) for the translation movement of the clamp (1).

3. The mounting device for a shielded Y-splice connector according to claim 1 or 2, **characterized in that** the unit for moving the clamp comprises a piston (2) whose one end is fixed on the clamp and the second end is fixed to an anchor.

4. The mounting device for a shielded Y-splice connector according to one of claims 1 to 3, **characterized in that** the unit for moving the clamp further comprises at least one sensor (41, 42) detecting the displacement of the moving clamp.
